(19) Europäisches Patentamt / European Patent Office / Office européen des brevets

(11) **EP 2 132 710 B1**

(12) **FASCICULE DE BREVET EUROPEEN**

(45) Date de publication et mention de la délivrance du brevet:
**04.01.2023 Bulletin 2023/01**

(21) Numéro de dépôt: **08761786.6**

(22) Date de dépôt: **18.01.2008**

(51) Classification Internationale des Brevets (IPC):
**G06T 7/20** $^{(2017.01)}$

(52) Classification Coopérative des Brevets (CPC):
**G06T 7/20**

(86) Numéro de dépôt international:
**PCT/FR2008/000068**

(87) Numéro de publication internationale:
**WO 2008/107553 (12.09.2008 Gazette 2008/37)**

(54) **PROCEDE ET DISPOSITIFS DE REALITE AUGMENTEE UTILISANT UN SUIVI AUTOMATIQUE, EN TEMPS REEL, D'OBJETS GEOMETRIQUES PLANAIRES TEXTURES, SANS MARQUEUR, DANS UN FLUX VIDEO**

REALITÄTSERWEITERUNGSVERFAHREN UND -GERÄTE MIT AUTOMATISCHER ECHTZEIT-VERFOLGUNG MARKERFREIER, TEXTURIERTER UND PLANARER GEOMETRISCHER OBJEKTE IN EINEM VIDEO-STREAM

AUGMENTED REALITY METHOD AND DEVICES USING A REAL TIME AUTOMATIC TRACKING OF MARKER-FREE TEXTURED PLANAR GEOMETRICAL OBJECTS IN A VIDEO STREAM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.01.2007 FR 0752809**

(43) Date de publication de la demande:
**16.12.2009 Bulletin 2009/51**

(73) Titulaire: **QUALCOMM Incorporated**
**San Diego, CA 92121 (US)**

(72) Inventeurs:
• **LEFEVRE, Valentin**
**92800 - Puteaux (FR)**
• **LIVET, Nicolas**
**75011 - Paris (FR)**

(74) Mandataire: **Loveless, Ian Mark**
**Reddie & Grose LLP**
**The White Chapel Building**
**10 Whitechapel High Street**
**London E1 8QS (GB)**

• **LEPETIT V ET AL: "Fully automated and stable registration for augmented reality applications" MIXED AND AUGMENTED REALITY, 2003. PROCEEDINGS. THE SECOND IEEE AND ACM INTERNATIONAL SYMPOSIUM ON 7-10 OCT. 2003, PISCATAWAY, NJ, USA,IEEE, 7 octobre 2003 (2003-10-07), pages 93-102, XP010662800 ISBN: 0-7695-2006-5**
• **LEPETIT V., FUA P.: "Keypoint Recognition Using Randomized Trees" IEEE TRANSACTIONS ON PATTERN ANALYSIS AND MACHINE INTELLIGENCE, vol. 28, no. 9, 2006, pages 1465-1479, XP002522540**
• **VACCHETTI L ET AL: "Fusing online and offline information for stable 3D tracking in real-time" PROCEEDINGS 2003 IEEE CONFERENCE ON COMPUTER VISION AND PATTERN RECOGNITION. CVPR 2003. MADISON, WI, JUNE 18 - 20, 2003, PROCEEDINGS OF THE IEEE COMPUTER CONFERENCE ON COMPUTER VISION AND PATTERN RECOGNITION, LOS ALAMITOS, CA, IEEE COMP. SOC, US, vol. VOL. 2 OF 2, 18 juin 2003 (2003-06-18), pages 241-248, XP010644679 ISBN: 0-7695-1900-8**

(56) Documents cités:
**EP-A- 1 594 322**

• CHEN JING ET AL.: "An improved real-time natural feature tracking algorithm for AR application" PROCEEDINGS OF THE 16TH INTERNATIONAL CONFERENCE ON ARTIFICIAL REALITY AND TELEXISTENCE - WORKSHOPS (ICAS'06), 2006, XP008084001

## Description

La présente invention concerne la combinaison d'images réelles et virtuelles, aussi appelée réalité augmentée, et plus particulièrement un procédé et des dispositifs de réalité augmentée utilisant un suivi automatique, en temps réel, d'objets géométriques planaires texturés, sans marqueur, dans un flux vidéo.

La réalité augmentée a pour objet d'insérer un ou plusieurs objets virtuels dans les images d'un flux vidéo, Selon le type d'application, la position et l'orientation de ces objets virtuels peuvent être déterminées par des données liées à certains éléments de cette scène, par exemple des coordonnées d'un point particulier de la scène tel que la main d'un joueur ou par des données externes à la scène représentée par les images, par exemple des coordonnées issues directement d'un scénario de jeu. Lorsque la position et l'orientation sont déterminées par des données liées à certains éléments de cette scène réelle, il peut être nécessaire de suivre ces éléments en fonction des mouvements de la caméra ou des mouvements de ces éléments eux-mêmes dans la scène. Les opérations de suivi d'éléments et d'incrustation d'objets virtuels dans les images réelles peuvent être exécutées par des calculateurs distincts ou par un même calculateur.

Il existe plusieurs méthodes de suivi d'éléments dans un flux d'images. Généralement, les algorithmes de suivi d'élément, aussi appelé algorithme de poursuite de cible, utilisent un marqueur qui peut être visuel ou utiliser d'autres moyens tel que des moyens basés sur les radio fréquences ou l'infrarouge. Alternativement, certains algorithmes utilisent une reconnaissance de forme pour suivre un élément particulier dans un flux d'image.

L'Ecole Polytechnique Fédérale de Lausanne a développé un algorithme de suivi visuelle n'utilisant pas de marqueur et dont l'originalité réside dans l'appariement de points particuliers entre l'image courante d'un flux vidéo avec une image clé, appelée *keyframe,* obtenue à l'initialisation du système et une image clé mise à jour durant l'exécution du suivi visuel.

L'objectif de cet algorithme de suivi visuel est de retrouver, dans une scène réelle, la pose, c'est-à-dire la position et l'orientation, d'un objet dont le maillage tridimensionnel est disponible, ou de retrouver les paramètres extrinsèques de position et d'orientation d'une caméra filmant cet objet, immobile, grâce à l'analyse d'image.

L'image vidéo courante est comparée avec une ou plusieurs images clés enregistrées pour retrouver un nombre important de correspondances entre ces paires d'images afin d'estimer la pose de l'objet. A cette fin, une image clé est composée de deux éléments : une image capturée du flux vidéo et une pose (orientation et position) de l'objet réel apparaissant dans cette image. Il convient de distinguer les images clés « hors ligne », ou *off line,* des images clés « en ligne », ou *on line.* Les images clés hors ligne sont des images extraites du flux vidéo dans lesquelles l'objet à suivre a été placé manuellement grâce à l'utilisation d'un dispositif de pointage tel qu'une souris ou à l'aide d'un outil de réglage tel qu'un Pocket Dial commercialisé par la société Doepfer. Les images clés hors ligne caractérisent de préférence la pose d'un même objet dans plusieurs images. Elles sont crées et enregistrées « hors ligne », c'est-à-dire hors du régime permanent de l'application. Les images clé « en ligne » sont mémorisées dynamiquement durant l'exécution de programme de suivi. Elle sont calculées lorsque l'erreur, c'est-à-dire la distance entre les appariements des points d'intérêts, est faible. Les images clés en ligne remplacent les images clés hors ligne utilisées pour initialiser l'application. Leur utilisation vise à réduire le décalage, aussi appelé dérive, qui peut devenir important lorsque l'on s'éloigne trop de la position relative initiale entre la caméra et l'objet. L'apprentissage de nouvelles images clés en ligne a aussi pour résultat de rendre l'application plus robuste aux variations de lumière extérieure et aux variations de colorimétries des caméras. Elles ont cependant le désavantage d'introduire un effet de « vibrations » sur la pose de l'objet dans le temps. Lors de l'apprentissage d'une nouvelle image clé en ligne, celle-ci vient remplacer l'image clé précédente, hors ligne ou en ligne. Elle est utilisée comme image clé courante.

Chaque image clé, hors ligne ou en ligne, comprend une image dans laquelle l'objet est présent et une pose pour caractériser l'emplacement de cet objet ainsi qu'un certain nombre de points d'intérêts qui caractérisent l'objet dans l'image. Les points d'intérêts sont, par exemple, construits à partir d'un détecteur de points de Harris et représentent des emplacements avec des fortes valeurs de gradients directionnels dans l'image.

Avant d'initialiser l'application, il est nécessaire de déterminer une ou plusieurs images clés hors ligne. Il s'agit généralement d'images extraites du flux vidéo, qui contiennent l'objet à traquer, et auxquelles sont associées une position et une orientation du modèle tridimensionnel de ce objet. Pour cela, un opérateur fait correspondre visuellement un modèle filaire à l'objet réel. La phase de préparation manuelle consiste donc à retrouver une première estimation de la pose de l'objet dans une image extraite du flux vidéo, ce qui revient à formaliser la transformation affine initiale $T_{p \to c}$, matrice de passage entre le repère associé à l'objet suivi vers le repère attaché à la caméra. La transformation affine initiale peut se décomposer selon une première transformation $T_{o \to c}$ relative à une position initiale de l'objet, par exemple au centre de l'écran, c'est-à-dire une transformation liée au changement de repère entre le repère de la caméra et le repère de l'objet, et en une seconde transformation $T_{p \to o}$ relative au déplacement et à la rotation de l'objet de sa position initiale au centre de l'écran vers la position et l'orientation dans lesquelles se trouve réellement l'objet sur l'image clé, où $T_{p \to e} = T_{p \to o} \cdot T_{o \to c}$. Si les valeurs $\alpha$, $\beta$ et $\gamma$ correspondent à la translation de l'objet de sa position initiale au centre de l'image vers sa position dans l'image clé et si les valeurs $\theta$, $\phi$ et $\varphi$ correspondent à la rotation de l'objet de sa position initiale au centre de l'image vers sa position dans l'image clé selon les axes x, y et z, la transformation $T_{p \to o}$ peut

s'exprimer alors sous la forme de la matrice suivante,

$$T_p^o = \begin{bmatrix} \cos\varphi\cos\phi + \sin\varphi\sin\theta\sin\phi & \sin\varphi\cos\phi - \cos\varphi\sin\theta\sin\phi & \cos\theta\sin\phi & \alpha \\ -\sin\varphi\cos\theta & \cos\varphi\cos\theta & \sin\theta & \beta \\ \sin\varphi\sin\theta\cos\phi - \cos\varphi\sin\phi & -\cos\varphi\sin\theta\cos\phi - \sin\varphi\sin\phi & \cos\theta\cos\phi & \gamma \\ 0 & 0 & 0 & 1 \end{bmatrix}$$

L'utilisation de ce modèle permet d'établir le lien entre les coordonnées des points du modèle tridimensionnel de l'objet exprimées dans le repère de l'objet et les coordonnées de ces points dans le repère de la caméra.

Lors de l'initialisation de l'application, les images clés hors ligne sont traitées afin de positionner des points d'intérêts en fonction des paramètres choisis lors du lancement de l'application. Ces paramètres sont spécifiés de façon empirique pour chaque type d'utilisation de l'application et permettent de moduler le noyau de détection d'appariement et d'obtenir une meilleure qualité dans l'estimation de la pose de l'objet selon les caractéristiques de l'environnement réel. Ensuite, lorsque l'objet réel dans l'image courante est dans une pose qui est proche de la pose de ce même objet dans une des images clé hors lignes, le nombre d'appariements devient important. Il est alors possible de retrouver la transformation affine permettant de caler le modèle tridimensionnel virtuel de l'objet sur l'objet réel.

Lorsqu'une telle correspondance a été trouvée, l'algorithme passe en régime permanent. Les déplacements de l'objet sont suivis d'une trame sur l'autre et les dérives éventuelles sont compensées grâce aux informations contenues dans l'image clé hors ligne retenue lors de l'initialisation et dans l'image clé en ligne calculée lors de l'exécution de l'application.

L'application de suivi combine deux types d'algorithme : une détection de points d'intérêts, par exemple une version modifiée de détection de points de Harris, et une technique de reprojection des points d'intérêts positionnés sur le modèle tridimensionnel vers l'image plane. Cette reprojection permet de prévoir le résultat d'une transformation spatiale d'une trame sur l'autre. Ces deux algorithmes combinés permettent un suivi robuste d'un objet selon six degrés de liberté.

D'une façon générale, un point p de l'image est la projection d'un point P de la scène réelle avec $p \sim P_1 \cdot P_E \cdot T_{p \to c} \cdot P$ où $P_I$ est la matrice des paramètres intrinsèques de la caméra, c'est-à-dire sa focale, le centre de l'image et le décalage, $P_E$ est la matrice des paramètres extrinsèques de la caméra, c'est-à-dire la position de la caméra dans l'espace réelle, et $T_{p \to c}$ est la matrice de passage entre le repère associé à l'objet suivi vers le repère attaché à la caméra. Seule la position relative de l'objet par rapport à la position relative de la caméra est ici considérée, ce qui revient à placer le repère de la scène réelle au niveau du centre optique de la caméra. Il en résulte la relation $p \sim P_1 \cdot T_{p \to c} \cdot P$. La matrice $P_I$ étant connue, le problème de suivi consiste donc à déterminer la matrice $T_{p \to c}$, c'est à dire la position et l'orientation de l'objet par rapport au repère de la caméra.

Cependant, il est important de noter que lorsque la mesure d'erreur devient trop importante, c'est-à-dire lorsque le nombre d'appariements entre l'image clé courante et l'image courante devient trop faible, le suivi subit un décrochage (on considère que l'estimation de la pose de l'objet n'est plus suffisamment cohérente) et une nouvelle phase d'initialisation est nécessaire.

La pose d'un objet est estimée selon les correspondances entre les points d'intérêts de l'image courante issue du flux vidéo, les points d'intérêts de l'image clé courante et les points d'intérêts de l'image précédente issue du flux vidéo. Ces opérations sont appelées phase d'appariement. A partir des corrélations les plus significatives, le logiciel calcule la pose de l'objet correspondant le mieux aux observations.

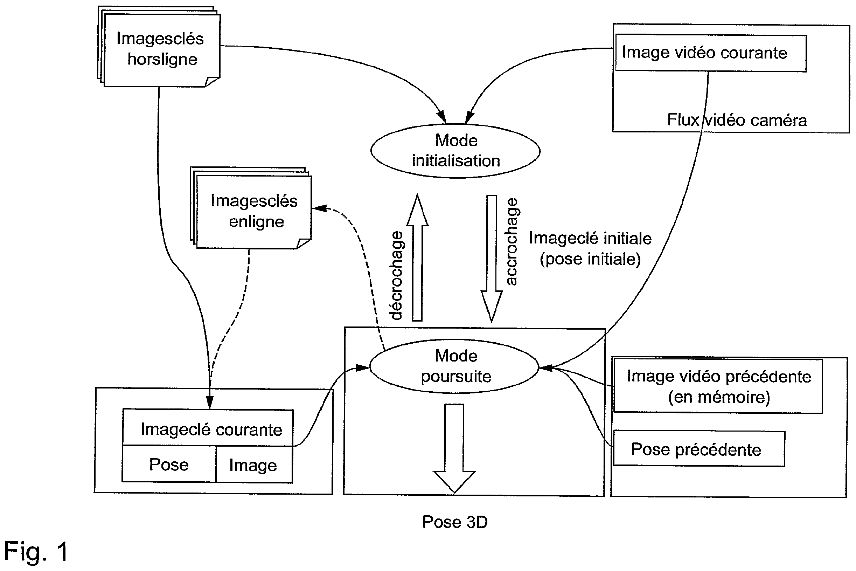

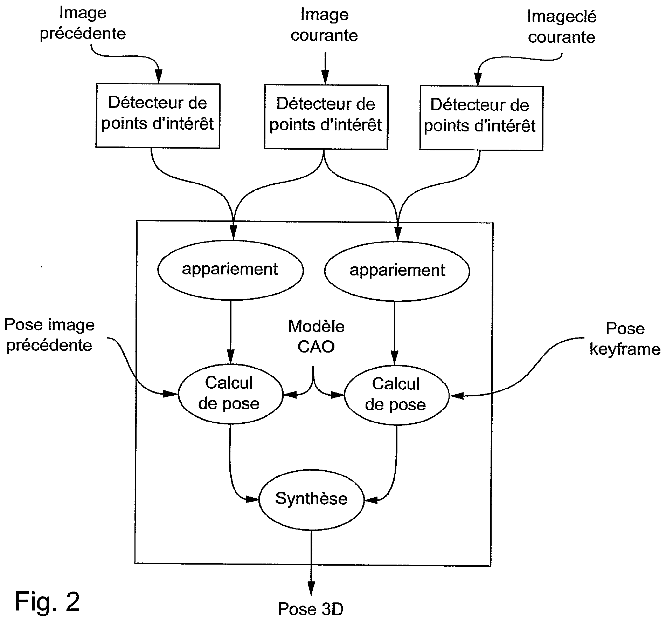

Les figures 1 et 2 illustrent cette application de suivi.

Alternativement, lors de la phase de création d'images clé hors lignes, la pose d'un objet peut être déterminée selon la configuration de ses points caractéristiques. Pour cela, des blocs d'images centrés sur des points d'intérêts sont générés à partir d'images clés hors ligne selon des transformations affines ou des déformations homographiques. Ces blocs d'images ainsi que les blocs d'images obtenus après transformation sont appelés *patches.* Un *patch* peut ici être défini comme un bloc d'image comprenant un point d'intérêt et auquel est associé la pose de l'objet correspondant. La pose de chaque *patch* est calculée selon la transformation effectuée pour obtenir le bloc d'image correspondant.

Les patches sont de preference arranges selon un arbre de decision pour limiter les temps de calcul durant l'execution de ['application de suivi. Ainsi, pour chaque image issue d'un flux video, l'application de suivi d'objet determine certains points d'interets de cette image et compare les blocs d'image centres sur ces points avec les patches prealablement cites pour determiner la pose de l'objet dans l'image. Cependant, cette solution induit egalement un effet de « vibration » sur la pose de l'objet dans le temps.

Les solutions proposees de suivi d'objets pour les applications de realite augmentee sont souvent issues de la recherche et ne prennent pas en compte les contraintes d'implementation de systemes commerciaux. En particulier, les problemes lies a la robustesse, a la possibilite lancer rapidement l'application sans necessiter une phase manuelle d'initialisation, a la detection d'erreurs de type « decrochage » (lorsque l'objet a suivre est « perdu ») et a la reinitialisation automatique et temps reel apres de telles erreurs sont souvent laisses de cote.

L'invention permet de resoudre au moins un des problemes exposés precedemment.

L'invention telle que définie dans la revendication indépendante à laquelle il est fait référence avec la caractéristique préférée définie dans les revendications dépendantes.

Le procede selon l'invention permet ainsi d'automatiser l'initialisation d'une application de realite augmentee utilisant un suivi automatique, en temps reel, d'objets geometriques planaires textures, sans marqueur, dans un flux video. Ce procede permet egalement de reinitialiser l'application en cas de decrochage, c'est-a-dire lorsque l'objet a suivre est perdu.

D'autres avantages, buts et caracteristiques de la presente invention ressortent de la description detaillee qui suit, faite a titre d'exemple non limitatif, au regard des dessins annexes dans lesquels :

- la figure 1 represente schematiquement les principes essentiels de ('application de suivi d'objet developpe par l'Ecole Polytechnique Federate de Lausanne ;
- la figure 2 illustre certaines etapes du procede pour determiner la pose d'un objet dans une image d'un flux video a partir d'images cies et de ('image precedente du flux video ;
- la figure 3 illustre le schema general d'un algorithme de suivi d'objet selon l'invention ;
- la figure 4 montre un exemple d'appareil permettant d'implementer au moins partiellement l'invention ;
- la figure 5, comprenant les figures 5a et 5b, illustre deux exemples d'architectures pouvant e'tre utilisees lorsqu'un appareil mobile de capture et de visualisation d'images est utilise ;
- la figure 6 présente un exemple d'utilisation d'un appareil mobile de capture et de visualisation d'images pour une application de réalité augmentée avec suivi d'objet ; et,
- la figure 7 montre comment un appareil mobile de capture et de visualisation d'images peut être utilisé comme un curseur ou un capteur de mouvement à six degrés de liberté.

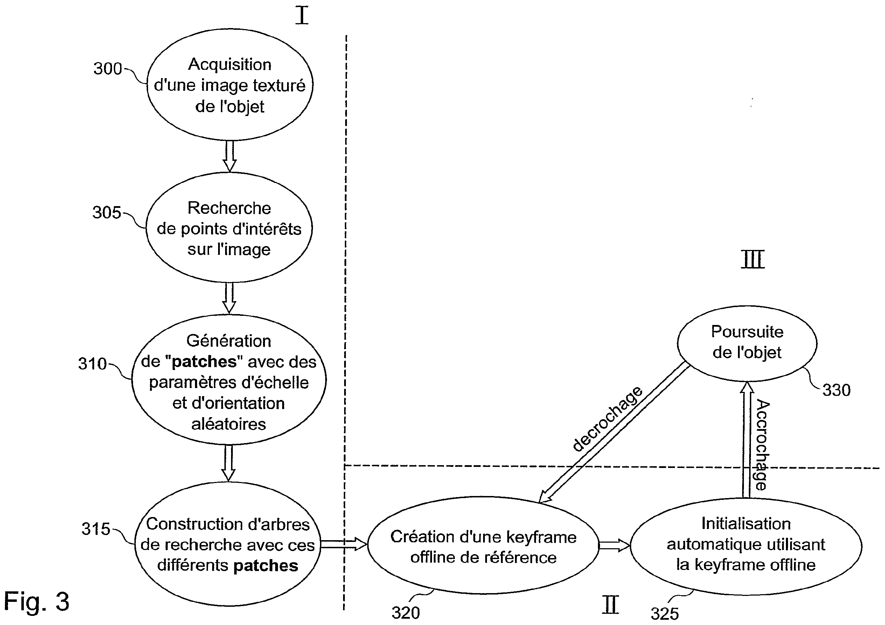

Le procédé selon l'invention a en particulier pour objet l'automatisation des phases d'initialisation et de réinitialisation après un décrochage de l'application de suivi d'objet sur des images issues d'un flux vidéo. La figure 3 illustre le schéma global de l'application de suivi d'objet mettant en oeuvre l'invention.

Comme représenté sur la figure 3, l'application de suivi d'objet comprend trois phases : une phase de préparation (I), une phase d'initialisation ou de réinitialisation (II) et une phase de suivi d'objet (III).

La phase de préparation (I) consiste principalement à extraire les points caractéristiques de l'objet à suivre afin de préparer un arbre de recherche. Après avoir acquis une image texturée de l'objet (étape 300), les points d'intérêts de l'image sont retrouvés (étape 305) selon un algorithme classique tel que par exemple un détecteur de points de Harris. Une image texturée de l'objet est de préférence une image sur laquelle figure l'objet seul, telle qu'une image de synthèse ou une image sur laquelle l'objet a été détouré et le fond supprimé.

Lorsque les points d'intérêts de l'objet ont été déterminés, l'application extrait les blocs d'images centrés sur ces points afin de générer des *patches.* Les *patches* sont générés (étape 310), par exemple, par des transformations aléatoires basées sur des translations, des rotations et des changements d'échelle. Par exemple, autour du point d'intérêt $m_0$ de l'image, il est possible d'effectuer la transformation affine définie par la relation suivante,

$$(n - n_0) = H(m - m_0) + T(t_1, t_2)$$

où le point n est la transformation du point m, $T(t_1, t_2)$ correspond à une translation autour du point $m_0$, $t_1$ étant une petite translation verticale dans l'image et $t_2$ étant une petite translation horizontale et $H = R_\alpha \cdot R_\beta^{-1} \cdot S(\lambda_1, \lambda_2) \cdot R_\beta$. $R_\alpha$ et $R_\beta^{-1}$ correspondent à des rotations selon deux axes orthogonaux et $S(\lambda_1, \lambda_2)$ représente le changement d'échelle. Les paramètres à faire varier aléatoirement sont donc $\alpha$, $\beta$, $\lambda_1$, $\lambda_2$, $t_1$ et $t_2$,

A chaque *patch* est associé une pose qui est calculée selon la transformation appliquée au bloc d'image pour obtenir le *patch* correspondant. Un arbre de recherche est ensuite construit à partir des *patches* générés (étape 315).

Lors de la phase d'initialisation (II), une image clé hors ligne est créée à partir d'une première image issue du flux vidéo (étape 320). Cette première image issue du flux vidéo est mémorisée pour être utilisée comme image clé hors ligne pour le suivi de l'objet dans les images suivantes issues du flux vidéo. Pour déterminer la pose de l'objet dans cette première image, plusieurs points d'intérêts sont déterminés, par exemple les p points de plus fort gradient directionnel. Le bloc d'image défini autour de chacun de ces points est comparé aux *patches* déterminés durant la phase de préparation, selon l'arbre de recherche. La taille de ces blocs d'images est de préférence égale à celle des *patches*. La pose associée à chacun des *patches* les plus similaires des blocs d'image est utilisée pour déterminer la pose de l'objet dans l'image. La pose de l'objet peut être définie comme la moyenne des poses de chaque *patch* sélectionné, c'est-à-dire de chaque *patch* le plus similaire à chacun des blocs d'images, ou selon un mécanisme de vote. La pose ainsi déterminée est associée à l'image issue du flux vidéo pour former l'image clé hors ligne. Cette image clé hors ligne est ensuite utilisée pour initialiser l'application de suivi (étape 325). Ce procédé est rapide est permet une initialisation instantanée.

Lorsque la pose de l'objet est déterminée dans la première image est que l'image clé courante est sélectionnée (image clé hors ligne déterminée durant la phase d'initialisation), l'application de suivi peut retrouver l'objet (phase III) dans les images successives du flux vidéo selon le mécanisme de suivi évoqué précédemment (étape 330). Selon ce mécanisme, les déplacements de l'objet (déplacement de l'objet dans la scène ou déplacement induit par le mouvement de la caméra dans la scène) sont suivis d'une trame sur l'autre et les dérives éventuelles sont compensées grâce aux informations contenues dans l'image clé hors ligne retenue lors de l'initialisation et, éventuellement, dans l'image clé en ligne calculée lors de l'exécution de l'application. L'application de suivi combine avantageusement des algorithmes de détection de points d'intérêts et de reprojection des points d'intérêts positionnés sur le modèle tridimensionnel vers l'image plane pour prévoir le résultat d'une transformation spatiale d'une trame sur l'autre. La pose de l'objet est ainsi estimée selon les correspondances entre les points d'intérêts de l'image courante issue du flux vidéo, les points d'intérêts de l'image clé courante et les points d'intérêts de l'image précédente issue du flux vidéo, c'est-à-dire selon l'appariement des points d'intérêts issus de ces images.

Lorsque la mesure d'erreur devient trop importante, c'est-à-dire lorsque le nombre d'appariement entre l'image clé courante et l'image courante devient trop faible, le suivi subit un décrochage et une phase de réinitialisation est nécessaire. La phase de réinitialisation est similaire à la phase d'initialisation décrite précédemment (étapes 320 et 325). Durant cette phase, l'image courante du flux vidéo est utilisée pour former la nouvelle image clé hors ligne dont la pose est déterminée selon ses points d'intérêts et l'arbre de recherche comprenant les *patches* déterminés durant la phase de préparation. L'image clé hors ligne est donc une image clé hors ligne dynamique qui est mise à jour automatiquement lorsque l'application de suivi décroche.

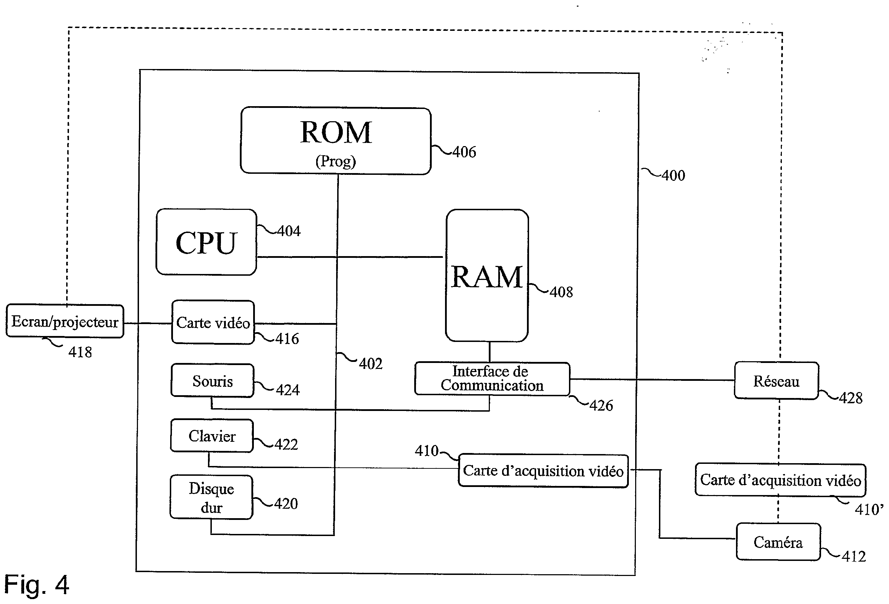

La figure 4 représente schématiquement un appareil adapté à mettre en œuvre l'invention. L'appareil 400 est par exemple un micro-ordinateur, une station de travail ou une console de jeux.

L'appareil 400 comporte de préférence un bus de communication 402 auquel sont reliés :

- une unité centrale de traitement ou microprocesseur 404 (CPU, *Central Processing Unit*) ;
- une mémoire morte 406 (ROM, *Read Only Memory*) pouvant comporter le système d'exploitation et des programmes tels que "Prog" ;
- une mémoire vive ou mémoire cache 408 (RAM, *Random Access Memory*) comportant des registres adaptés à enregistrer des variables et paramètres créés et modifiés au cours de l'exécution des programmes précités ;
- une carte d'acquisition vidéo 410 reliée à une caméra 412 ; et,
- une carte graphique 416 reliée à un écran ou à un projecteur 418.

Optionnellement, l'appareil 400 peut également disposer des éléments suivants :

- un disque dur 420 pouvant comporter les programmes "Prog" précités et des données traitées ou à traiter selon l'invention ;
- un clavier 422 et une souris 424 ou tout autre dispositif de pointage comme un crayon optique, un écran tactile ou une télécommande permettant à l'utilisateur d'interagir avec les programmes selon l'invention ;
- une interface de communication 426 reliée à un réseau de communication distribué 428, par exemple le réseau Internet, l'interface étant apte à transmettre et à recevoir des données ;
- une carte d'acquisition de données 414 reliée à un capteur (non représenté) ; et,
- un lecteur de cartes mémoires (non représenté) adapté à y lire ou à y écrire des données traitées ou à traiter selon l'invention.

Le bus de communication permet la communication et l'interopérabilité entre les différents éléments inclus dans l'appareil 400 ou reliés à lui. La représentation du bus n'est pas limitative et, notamment, l'unité centrale est susceptible de communiquer des instructions à tout élément de l'appareil 400 directement ou par l'intermédiaire d'un autre élément de l'appareil 400.

Le code exécutable de chaque programme permettant à l'appareil programmable de mettre en oeuvre les processus selon l'invention, peut être stocké, par exemple, dans le disque dur 420 ou en mémoire morte 406.

Selon une variante, le code exécutable des programmes pourra être reçu par l'intermédiaire du réseau de communication 428, via l'interface 426, pour être stocké de façon identique à celle décrite précédemment.

Les cartes mémoires peuvent être remplacées par tout support d'information tel que, par exemple, un disque compact (CD-ROM ou DVD). De manière générale, les cartes mémoires peuvent être remplacées par des moyens de stockage d'information, lisibles par un ordinateur ou par un microprocesseur, intégrés ou non à l'appareil, éventuellement amovibles, et adaptés à mémoriser un ou plusieurs programmes dont l'exécution permet la mise en œuvre du procédé selon l'invention.

De manière plus générale, le ou les programmes pourront être chargés dans un des moyens de stockage de l'appareil 400 avant d'être exécutés.

L'unité centrale 404 va commander et diriger l'exécution des instructions ou portions de code logiciel du ou des programmes selon l'invention, instructions qui sont stockées dans le disque dur 420 ou dans la mémoire morte 406 ou bien dans les autres éléments de stockage précités. Lors de la mise sous tension, le ou les programmes qui sont stockés dans une mémoire non volatile, par exemple le disque dur 420 ou la mémoire morte 406, sont transférés dans la mémoire vive 408 qui contient alors le code exécutable du ou des programmes selon l'invention, ainsi que des registres pour mémoriser les variables et paramètres nécessaires à la mise en œuvre de l'invention.

Il convient de noter que l'appareil de communication comportant le dispositif selon l'invention peut également être un appareil programmé. Cet appareil contient alors le code du ou des programmes informatiques par exemple figé dans un circuit intégré à application spécifique (ASIC).

Alternativement, l'image issue de la carte vidéo 416 peut être transmise à l'écran ou au projecteur 418 à travers l'interface de communication 426 et le réseau de communication distribué 428. De même, la caméra 412 peut être reliée à une carte d'acquisition vidéo 410', distincte de l'appareil 400, de telle sorte que les images issues de la caméra 412 soient transmises à l'appareil 400 à travers le réseau de communication distribué 428 et l'interface de communication 426.

En raison de la simplification de mise en œuvre apportée par le procédé d'initialisation et de réinitialisation automatique de l'invention, l'application de suivi d'objet peut être mise en œuvre sans avoir recours à un spécialiste. L'application de suivi peut être utilisée de façon standard pour suivre un objet dans une séquence d'images issues d'un flux vidéo, par exemple pour incruster une séquence vidéo sur un objet de la scène en prenant en compte la position et l'orientation de cet objet, mais aussi pour déterminer le mouvement d'une caméra selon l'analyse d'un objet statique de la scène. Dans ce cas l'objet fait partie du décor et retrouver la pose de cet objet dans la scène revient donc à retrouver la pose de la caméra par rapport à celui-ci. Il devient alors possible d'ajouter des éléments virtuels dans la scène à condition que la transformation géométrique entre l'objet et le modèle géométrique de la scène soit connue. Ce qui est le cas. Cette approche autorise donc à augmenter la scène réelle (la partie de la pièce qui a été modélisée) avec des objets virtuels animés qui se déplacent en fonction de la géométrie de la scène.

Si Rf est le repère associé à l'objet suivi, Rs est le repère associé à la scène, Rk est le repère associé à la caméra et Rm est le repère du modèle 3D animé, il est nécessaire de définir la transformée $T_{f \to c}$ du repère Rf vers le repère Rc, en utilisant la transformée $T_{f \to s}$ (connue) du repère Rf vers le repère Rs et la transformée $T_{s \to m}$ du repère Rs vers le repère Rm. La transformation affine qui permet de passer du repère Rm associé au modèle tridimensionnel virtuel au repère Rc de la caméra est déterminée par la relation suivante,

$$P_{Rc} = T_{f \to c} \cdot T_{f \to s}^{-1} \cdot T_{s \to m}^{-1} \cdot P_{Rm}$$

où $P_{Rc}$ est la transformée du point $P_{Rm}$ défini dans le repère Rm du modèle tridimensionnel et $T_{i \to j}$ est la transformation affine permettant de passer du repère i au repère j. La relation précédente peut être simplifiée sous la forme suivante,

$$P_{Rc} = T_{f \to c} \cdot T_{s \to f} \cdot T_{m \to s} \cdot P_{Rm}$$

soit,

$$P_{Rc} = T_{m \to c} \cdot P_{Rm}$$

La projection du point $P_{Rm}$ en fonction des paramètres de la caméra, pouvant s'exprimer sous la forme de la matrice $P_I$, permet d'obtenir le point $P_{Rc}^i$ défini dans l'image issue de la caméra. Le point $P_{Rc}^i$ est ainsi défini selon la relation suivante,

$$P_{Rc}^i = P_I \cdot T_{m \to c} \cdot P_{Rm}$$

Ainsi, un objet tridimensionnel de synthèse défini dans le repère de la scène peut être projeté sur l'image courante du flux vidéo pour augmenter le flux vidéo avec des objets virtuels animés.

L'application de suivi peut également être utilisée comme interface avec un appareil mobile tel qu'un PDA (*Personal Digital Assistant*), un téléphone mobile ou tout autre dispositif pourvus d'un capteur vidéo.

En particulier, l'application peut consister à retrouver, puis à suivre dans l'image un rectangle texturé préalablement appris, par exemple mémorisé dans une base de donnée d'objets, afin d'augmenter le flux vidéo réel avec des modèles virtuels ou des flux vidéo secondaires calés sur l'objet. L'intérêt principal de cette technologie repose sur le fait que la caméra et l'objet poursuivi peuvent être déplacés librement dans la scène. Le traitement géométrique de changement de repère est identique à celui décrit précédemment.

L'application de suivi d'objet est particulièrement robuste pour les normes actuelles de basse qualité telle que la norme H.263 souvent utilisée pour l'envoi et la réception de flux vidéo depuis et vers un serveur télécom. De plus, il est possible d'envoyer des informations de commande ou de contrôle grâce à l'utilisation des touches de l'appareil mobile en utilisant, par exemple, le DTMF (*Dual Tone Modulated Frequency*) sur l'infrastructure de l'opérateur de télécom.

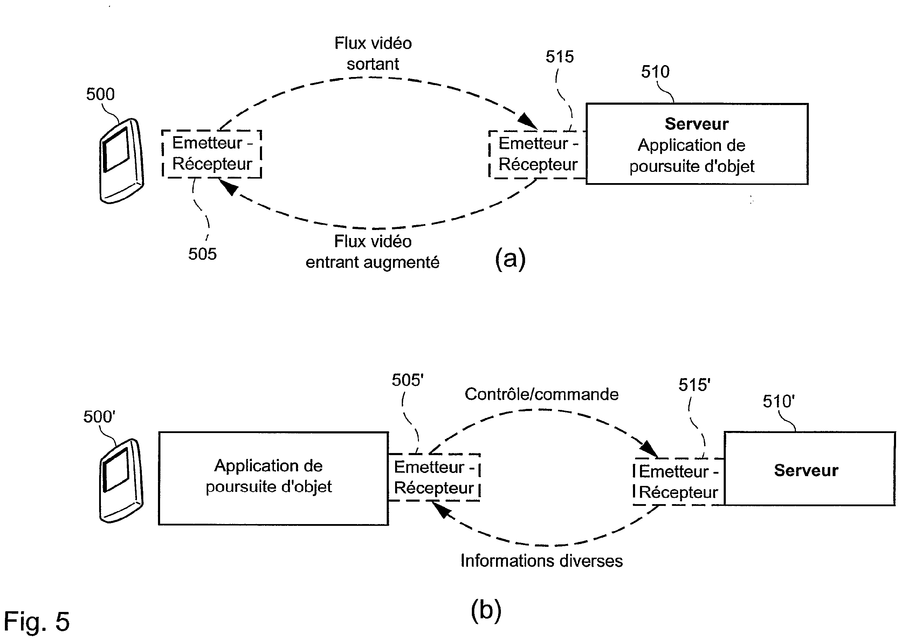

Dans ce type d'applications, les traitements de suivi de l'objet et/ou d'enrichissement du flux vidéo peuvent être locaux ou déportés. La figure 5, comprenant les figures 5a et 5b, illustre deux exemples d'architectures pouvant être utilisées. La figure 5a correspond à une technique de suivi déportée. Le dispositif mobile 500 comprend un émetteur/récepteur 505 permettant de transmettre le flux vidéo au serveur 510 qui comprend un émetteur/récepteur 515. Le serveur 510 dispose d'une application de suivi d'objet et d'enrichissement de flux vidéo de telle sorte que le serveur 510 est adapté à recevoir un ou plusieurs flux vidéo issus d'un ou plusieurs dispositifs mobiles 500, à suivre un objet dans les images de ce flux, à intégrer un objet virtuel ou un flux vidéo secondaire dans ces images et à transmettre le flux vidéo ainsi modifié aux dispositifs mobiles 500 qui l'affichent. La figure 5b illustre une alternative selon laquelle l'application de suivi d'objet et d'enrichissement de flux vidéo est intégré dans l'appareil mobile 500'. Le serveur 510' comprend une application, par exemple un jeu, contrôlée par les commandes de l'appareil mobile 500'. Les données échangées entre le serveur 510' et l'appareil mobile 500' sont des instructions de contrôle et de commande ainsi que des informations générales telles que les résultats des instructions de contrôle et de commande. Le flux vidéo n'a pas besoin d'être transmis entre les émetteurs/récepteurs 505' et 515'. Quelque soit l'architecture utilisée, il est convient de noter que le serveur reçoit des informations sur le type d'objet à suivre, la position relative de la caméra par rapport à l'objet à suivre et de préférence les diverses actions effectuées par l'utilisateur.

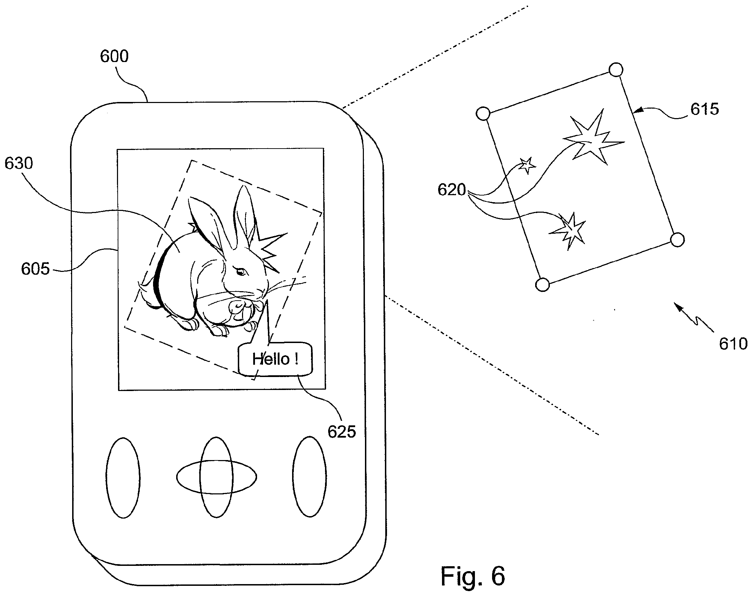

La figure 6 présente un exemple d'utilisation d'un appareil mobile de capture et de visualisation d'images pour une application de réalité augmentée avec suivi d'objet, utilisant l'une des architectures présentées sur la figure 5. L'appareil mobile 600 comprend un capteur d'images (non représenté) permettant d'acquérir un flux vidéo à partir d'une scène réelle 610 et un écran 605. La scène réelle 610 comprend un objet 615 qui doit être suivi, sur lequel figure une illustration 620 qui joue le rôle de texture. Dans cet exemple, la scène contenant l'objet suivi est projetée sur l'écran 605 et la position de cette objet dans la scène permet d'ajouter un objet virtuel tel que le dialogue 625 ou encore l'objet virtuel tridimensionnel animé 630.

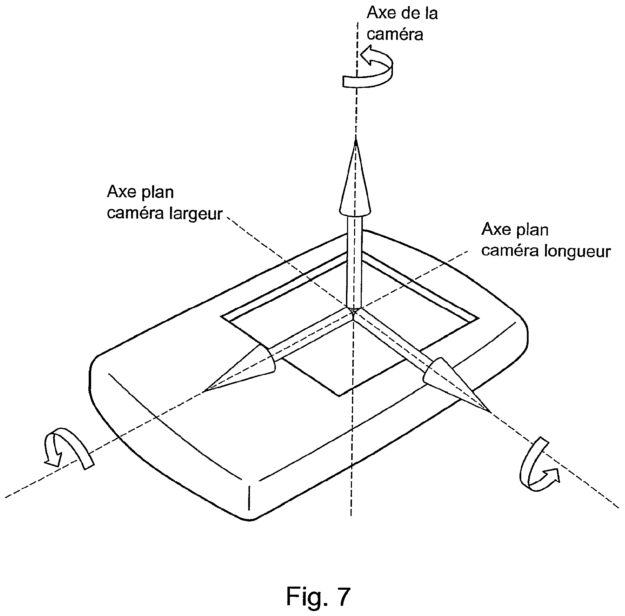

Comme illustré sur la figure 7, l'appareil mobile peut également être utilisé comme un curseur à six degrés de liberté ou comme un capteur de mouvement à six degrés de liberté selon la pose relative (position et orientation) de l'appareil mobile par rapport à l'objet suivi. Ce curseur ou ce capteur peut être utilisé pour contrôler des mouvements. Quatre types de déplacement peuvent être envisagé.

Selon un premier mode de déplacement de type « viseur » l'appareil mobile vise à simuler un outil de pointage pour guider des actions, viser et sélectionner des zones ou des objets et éventuellement déplacer la sélection. Il est ici considéré que la texture plane est posée sur une surface plane réelle telle qu'une table. Une cible est affichée sur l'écran dans l'axe optique du capteur d'images de l'appareil mobile. Celle-ci est déformée selon la position de la caméra du fait de sa projection virtuelle sur la table. L'objet cible projeté sur la table est une ellipse, ou un autre objet géométrique bidimensionnel. Il est également nécessaire de déterminer les intersections entre la direction donnée par l'axe optique de la caméra avec les objets virtuels tridimensionnels placés sur la table afin d'être en mesure d'effectuer des actions sur ces objets tridimensionnels. Enfin, il est important de pouvoir déterminer si la cible virtuelle attachée à la table recouvre partiellement un objet virtuel afin de pouvoir le sélectionner. Les différentes applications concernées par ce dispositif de pointage sont principalement les jeux vidéo et en particulier les jeux de simulations, les jeux de courses et les jeux de tirs.

Une première étape consiste à exprimer dans le plan de la table l'équation de l'ellipse résultant de l'intersection du cône centré sur l'axe optique avec le plan de la table. Le rayon du cône est avantageusement paramétrable par les touches du téléphone et s'exprime linéairement en fonction de la distance selon la fonction $f(z_d)=r$, par exemple $f(z_d)=az_d$ où $a$ est un paramètre modifiable par l'utilisateur et $z_d$ est la distance réelle entre le plan de la table et la caméra. Dans un souci de clarté, il est ici considéré que le repère Rf de l'objet suivi est identique à celui de la table, le plan x-y correspondant au plan de la table et l'axe z étant dirigé vers le haut. Le plan de la table a ainsi pour équation $z = 0$.

Dans le repère Rf, l'axe du cône, c'est à dire l'axe optique, est défini par la position de la caméra $P_c=[x_c\ y_c\ z_c]$

$^T$ et par le vecteur $\vec{t} = [x_t \, y_t \, z_t]^T$. L'intersection I de l'axe du cône avec le plan de la table est donc déterminée de la façon suivante,

$$\left( \begin{array}{l} x_i = x_c - \dfrac{z_c}{z_t} \cdot x_t \\[2mm] y_i = y_c - \dfrac{z_c}{z_t} \cdot y_t \\[2mm] z_i = 0 \end{array} \right)$$

Connaissant ce point d'intersection I, il est possible d'en déduire la distance entre ce point et la caméra et ainsi de déterminer le rayon b du cercle appartenant au cône dont le centre est ce point d'intersection I.

Il est alors possible d'en déduire l'équation suivante de l'ellipse dans le plan de la table selon le repère de l'objet suivi,

$$\frac{\left(x\cos\gamma + y\sin\gamma - x_I\right)^2}{a^2} + \frac{\left(y\cos\gamma - x\sin\gamma - y_I\right)^2}{b^2} = 1$$

où y représente l'angle entre la projection des axes y des repères liés à la caméra et à l'objet suivi dans le plan de la table. Cette relation permet de représenter l'ellipse dans l'image et de déterminer si un élément de l'image appartient à l'ellipse, c'est-à-dire si cet élément est sélectionnable ou non.

Un second mode de déplacement permet à l'utilisateur de se déplacer instinctivement dans un environnement virtuel comme si la caméra était placée au niveau de ses propres yeux. Ce mode de déplacement est particulièrement adapté aux jeux du type « *first person shooter* » et aux applications de type visite de musées virtuels. La capture de mouvement est réalisée à partir d'une position de référence quelconque dans l'espace tridimensionnel. Cette position de référence peut être modifiée à tout instant par une simple commande. Des petits mouvements de l'utilisateur par rapport à cette position de référence sont capturés et transmis à l'application. Cette approche permet d'effectuer des déplacements selon 6 degrés de libertés dans un environnement virtuel.

La liste des mouvements associés à ces déplacements par rapport au point de référence peut être définie de la façon suivante,

- le mouvement « avancer », respectivement « reculer », est identifié lorsque la caméra se rapproche, respectivement s'éloigne, de l'objet suivi selon un déplacement sur l'axe optique de la caméra ;
- une translation latérale est identifiée lorsque la caméra est déplacée sur la gauche ou sur la droite selon l'axe horizontal perpendiculaire à l'axe optique ;
- les mouvements d'élévation dans le décor virtuel sont identifiés par une translation vers le haut ou vers le bas la caméra ;
- regarder à gauche ou à droite est identifié par une rotation de la caméra selon l'axe vertical ;
- regarder vers le haut ou vers le bas est identifié par une rotation de la caméra selon l'axe horizontal perpendiculaire à l'axe optique ; et,
- pencher la tête à gauche ou à droite est identifié lorsque la caméra effectue une rotation selon l'axe optique.

Naturellement ces déplacements ne sont valides que si l'objet suivi est présent dans le champ de la caméra. Dans le cas contraire, la dernière position est conservée jusqu'à ce que l'objet suivi entre à nouveau dans le champ de la caméra.

Un troisième mode de déplacement permet à l'utilisateur de contrôler le déplacement d'un objet ou d'un personnage virtuel vu par l'utilisateur. Un tel mode de déplacement est particulièrement adapté pour les jeux vidéo et les jeux d'exploration. La capture de mouvement est réalisée selon la différence de pose entre le repère Rf de l'objet suivi et le repère Rc de la caméra. Les mouvements de l'objet ou du personnage virtuel sont définis de la façon suivante,

- l'axe optique de la caméra représente la scène telle qu'elle est perçue par l'objet ou le personnage virtuel ;
- une translation sur l'axe horizontal perpendiculaire à l'axe optique permet un déplacement latéral de l'objet ou du personnage virtuel ; et,

- le grossissement de la scène (zoom sur les objets virtuels) est déterminé par la distance entre la caméra et l'objet suivi.

Les rotations autour de l'axe optique et les translations selon l'axe vertical n'ont pas, a priori, de fonction pré-établie et peuvent correspondre à une utilisation particulière en fonction du type d'application visée.

Le quatrième mode de déplacement est celui selon lequel la capture de mouvement se fait directement entre la différence de pose du repère Rc de la caméra et du repère Rf de l'objet suivi. Ce mode a pour objectif d'inspecter un objet virtuel ou une scène virtuelle. Il est ainsi possible de se déplacer autour de cet élément, de se rapprocher ou de s'en éloigner. Ce mode de déplacement étant très utile et très intuitif, il est particulièrement destiné aux applications éducatives, démonstratives et aux jeux vidéo.

Comme il l'a été mentionné, le système décrit permet d'améliorer l'interactivité de nombreuses applications, notamment dans le domaine des jeux. L'enrichissement du flux vidéo combiné avec les commandes et la fonction du curseur permet, par exemple, de créer une interface adaptée à chaque application. A titre d'illustration, l'exemple suivant concerne un jeu de type Tamagoshi comportant différents modes tels que le dressage, la nourriture et la communication. L'animal peut ainsi faire le beau lorsque que l'on s'approche de lui, avoir le tournis lorsque l'on tourne rapidement autour de lui et nous suivre lorsque l'on tourne doucement autour de lui. On peut le battre, par exemple pour le punir en déplaçant rapidement la caméra d'un coté à l'autre. Il est possible de le féliciter en tapotant sur sa tête grâce à un mouvement de haut en bas. Une touche du clavier permet de sélectionner un aliment tandis qu'un mouvement de caméra vers l'animal permet de lancer l'objet 3D de synthèse correspondant à cet aliment. Différents aliments sont disponibles. Il est également possible de caresser notre animal après s'être approché un petit peu de lui. Différents mouvements de la caméra le font réagir différemment. L'animal peut poser des questions et l'utilisateur peut alors répondre par oui ou par non (non de haut en bas, oui de droite à gauche) et les réponses sont enregistrées. Un scénario peut être créé afin de rendre plus intelligente la discussion.

Un autre type d'applications concerne les présentations audiovisuelles dans lesquelles des objets virtuels, animés ou non, ou des flux vidéo sont ajoutés en temps réel. De telles applications sont notamment utilisées dans le domaine du « broadcast » ou « stand up cabinet ». Selon l'invention, l'animateur peut, durant sa présentation, manipuler librement un tableau, en orientation et en position, et permettre l'affichage d'un flux vidéo ou d'informations virtuelles sur ce tableau. Ce tableau comporte de préférence une ou plusieurs zones de couleur uniforme correspondant à l'emplacement où doit être inséré le flux vidéo secondaire, par exemple selon la technique de chromakey. Les objets virtuels sont insérés relativement à la pose courante du tableau. Pour faciliter ce suivi de tableau, celui-ci peut également contenir une zone texturée, par exemple sur l'extérieur ou au centre. L'animateur est alors notamment en mesure de lancer un reportage à partir de ce tableau : un technicien en coulisse déclenche l'affichage d'un flux vidéo dans le tableau puis l'animateur « lance » le sujet en approchant le tableau vers la caméra. La fenêtre d'affichage du flux vidéo sort ensuite du tableau et vient remplacer le flux vidéo courant. Un aspect important de cette application est qu'elle permet à l'animateur de pouvoir passer sa main devant le tableau et d'occulter partiellement le flux vidéo. L'animateur peut ainsi pointer un élément du flux vidéo présenté sur le tableau. Pour améliorer la robustesse du système et en particulier pour éviter les vibrations généralement présentes dans les applications de suivi de tableau, les dimensions des images du flux vidéo secondaire sont ici supérieures à celles de la ou des zones de couleur uniforme à recouvrir. Ainsi, un léger décalage du flux vidéo secondaire présenté sur le tableau ne laisse pas apparaître de zone de couleur uniforme.

D'autres applications telles que des visites virtuelles d'un musée ou d'un bâtiment peuvent aussi être facilement implémentées.

Bien que les exemples précédents soient basés sur l'utilisation d'une seule caméra, il est possible d'utiliser simultanément plusieurs caméras et de permettre ainsi, par exemple, la coopération de plusieurs utilisateurs situés dans un même environnement réel. Il est ainsi nécessaire de se placer dans un repère commun tel que le repère de l'une des caméra ou le repère de l'objet suivi, qui est le même pour les différentes caméras, et de faire une projection dans l'image issue de chaque caméra selon le repère associé à chacune des caméras.

Il est nécessaire de déterminer la transformation permettant de retrouver la position et l'orientation relatives des utilisateurs. La relation suivante permet de transformer les coordonnées d'un point exprimées dans le repère de la caméra n en coordonnées exprimées dans le repère de la caméra 1 :

$$P_{R_1} = T_{f \to c_1} \cdot T_{c_n \to f} \cdot P_{R_n}$$

où $P_{R_1}$ représente les coordonnées du point P dans le repère de la caméra 1, $P_{R_n}$ représente les coordonnées du point P dans le repère de la caméra n et $T_{i \to j}$ est la transformation affine qui permet de passer du repère i au repère j. La transformation précédente peut alors être écrite sous la forme simplifiée suivante,

$$P_{R_1} = T_{c_n \to c_1} \cdot P_{R_n}$$

Il ne reste plus alors qu'à effectuer la projection en fonction des paramètres des caméras (matrice $P_I$) afin de retrouver les coordonnées du point $P_{R_n}$ dans l'image, ce qui conduit à la relation suivante,

$$P_{R_c} = P_I \cdot T_{m \to c} \cdot P_{R_n}$$

L'utilisation de plusieurs caméras permet, par exemple, de mettre en œuvre des applications offrant aux utilisateurs la possibilité de se déplacer simultanément et de suivre un même objet. Un exemple de telles applications concerne les jeux, par exemple les jeux de course de voitures, d'avions ou de motos. Le principe de commande utilisé pour un jeu de course est celui correspondant au premier mode de déplacement, de type « viseur », ou au troisième mode permettant aux utilisateurs de contrôler le déplacement d'objets virtuels qu'ils voient. Il permet à plusieurs joueurs situés dans un même environnement réel de s'affronter sur un circuit tridimensionnel positionné par rapport à l'objet suivi dans la scène réelle. Chacun des utilisateurs contrôle un engin et le mode collaboratif permet aux différents engins d'interagir au sein de l'application. Il est également possible d'utiliser cette caractéristique pour des jeux de plateau ou de société. A partir d'un plateau téléchargé et imprimé, il est possible de considérer toute une gamme d'applications collaboratives. Les jeux de société qui utilisent un plateau et des pions peuvent ainsi être simulés par des objets virtuels tridimensionnels. Les touches du clavier peuvent alors permettre d'agir sur la configuration du jeu et d'affronter d'autres joueurs en direct. De même, des jeux de sport, par exemple de type tennis peuvent être implémentés. Pour ce type d'application, le mode de déplacement utilisé est de préférence le troisième mode permettant aux utilisateurs de contrôler le déplacement d'objets virtuels qu'ils voient. L'orientation de l'axe de visée de la caméra donne ainsi l'orientation du personnage dans les jeux. Une touche du clavier permet avantageusement de « taper » dans la balle lorsqu'elle arrive près du joueur. La position de référence permet d'effectuer simplement des déplacements avant et arrière, en translatant la caméra sur son axe de vue. Pour les déplacements latéraux, les mouvements latéraux de l'utilisateur sont pris en compte.

Naturellement, pour satisfaire des besoins spécifiques, une personne compétente dans le domaine de l'invention pourra appliquer des modifications dans la description précédente.

## Revendications

1. Procede mise en œuvre par ordinateur pour suivre en temps reel au moins un objet geometrique sensiblement plan d'une scene reelle dans aux moins deux images sensiblement consecutives d'au moins un flux video, dans une application de realite augmentee, l'initialisation du procede etant automatique, ce procede etant **caracterise en ce qu'**il comprend les etapes suivantes,

   - determination (305) d'une pluralite de points d'interets dans au moins une image texturee dudit au moins un objet sensiblement plan a suivre;
   - extraction (310) d'une pluralite de blocs d'image centres sur la pluralite de points d'interets et des positions et orientations, poses, associees aux blocs a partir d'au moins une image texturee dudit au moins un objet sensiblement plan a suivre;
   - reception d'une premiere image dudit au moins un flux video (300), ladite premiere image comprenant ledit au moins un objet sensiblement plan a suivre;
   - memoriser (320) ladite premiere image dans des premiers moyens de stockage pour etre utilise en tant qu'image cle hors ligne;
   - determination de la position et de l'orientation dudit au moins un objet sensiblement plan a suivre par determination d'un premier point d'interet et d'un seconde point d'interet de la premiere image et definition d'un premier bloc d'image autour du premier point d'interet et d'un seconde bloc d'image autour du seconde point d'interet dans ladite premiere image (320) et comparer le premier et le seconde bloc d'image a la pluralite de blocs d'image prealablement memorises dans des seconds moyens de stockage, chaque bloc d'image de ladite pluralite de blocs d'image prealablement memorises etant associe a une pose dudit au moins un objet sensiblement plan a suivre, ladite pose etant memorisee dans lesdits seconds moyens de stockage, lesdites position et orientation determinees dudit au moins un objet sensiblement plan a suivre dans ladite premiere image etant memorisee dans lesdits premiers moyens de stockages;
   - reception d'une seconde image dudit au moins un flux video (330), ladite seconde image comprenant ledit au moins un objet sensiblement plan a suivre; et,

- evaluation de la position et de l'orientation dudit au moins un objet sensiblement plan a suivre dans ladite seconde image a partir des donnees de l'image cle hors ligne et desdites position et orientation determinees dudit au moins au objet sensiblement plan a suivre dans ladite premiere image etant memorisees dans lesdits premiers moyens de stockage.

2. Procede selon la revendication 1 **caracterise en ce que** les etapes de reception d'une image et d'evaluation de la position et de l'orientation dudit au moins un objet sensiblement plan a suivre dans ladite image recue sont repetees pour des images dudit au moins un flux video suivant ladite seconde image.

3. Procede selon l'une quelconque des revendications 1 a 2 **caracterise en ce que** si la position et l'orientation dudit au moins un objet sensiblement plan A suivre ne peuvent pas etre evaluees dans une image recue a partir des donnees memorisees dans lesdits premiers moyens de stockage, la position et l'orientation dudit au moins un objet sensiblement plan a suivre dans ladite image recue sont evaluees a partir de ladite pluralite de blocs d'image (320).

4. Procede selon l'une quelconque des revendications precedentes **caracterise en ce que** les valeurs des donnees memorisees dans lesdits premiers moyens de stockage sont remplacees par une image recue et par la position et l'orientation evaluees dudit objet sensiblement plan a suivre dans ladite image recue.

5. Procede selon l'une quelconque des revendications precedentes **caracterise en ce qu'**il comprend en outre une etape d'evaluation de la pose du capteur d'image dont est issu ledit au moins un flux video dans un repere lie a ladite scene reelle a partir de la position evaluee dudit au moins un objet sensiblement plan a suivre.

6. Procede selon la revendication 5 **caracterise en ce qu'**il comprend en outre une etape de determination du mouvement dudit capteur d'image.

7. Procede selon l'une quelconque des revendications precedentes **caracterise en ce que** ledit au moins un objet sensiblement plan a suivre comprend une zone de couleur uniforme adaptee a mettre en oeuvre la technologie de chromakey.

8. Procede selon l'une quelconque des revendications precedentes selon lequel ledit au moins un objet sensiblement plan a suivre est suivi simultanement dans ledit au moins un flux video et dans au moins un autre flux video, ledit au moins un flux video et ledit au moins un autre flux video etant issus d'au moins deux cameras distincts, ledit procede comprenant en outre une etape d'estimation de la position et l'orientation relative desdits au moins deux cameras.

9. Procede selon l'une quelconque des revendications precedentes **caracterise en ce qu'**il comprend en outre une etape d'insertion d'au moins un element dans au moins l'une desdites images revues selon la position et l'orientation evaluees dudit au moins un objet sensiblement plan a suivre dans ladite image revue, ledit au moins un element etant choisi dans une liste comprenant au moins une representation d'au moins un objet virtuel et au moins un second flux video.

10. Procede selon la revendication 5 comprenant en outre une etape de determination du mouvement d'un appareil mobile (600) comprenant ledit capteur d'image et une etape d'indentification d'au moins un mouvement dans un decor virtuel selon ledit mouvement dudit appareil mobile.

11. Procede selon l'une quelconque des revendications precedentes comprenant en outre une etape de transmission d'au moins une instruction de controle et commande.

12. Procede selon rune quelconque des revendications 1 a 10 comprenant en outre une etape d'acquisition desdites premiere et seconde images et une etape d'affichage d'au moins une partie desdites premiere et seconde images lesdites etapes d'acquisition et d'affichage etant mises en oeuvre dans un dispositif mobile (500) deporte par rapport au dispositif mettant en oeuvre lesdites autres etapes.

13. Programme d'ordinateur comprenant des instructions adaptees a la mise en oeuvre de chacune des stapes du procede selon l'une quelconque des revendications 1 a 11.

14. Dispositif de traitement de données comprenant des moyens de mettre en œuvre le procédé pour suivre en temps reel au moins un objet geometrique sensiblement plan d'une scene reelle dans aux moins deux images sensiblement consecutives d'au moins un flux video, dans une application de realite augmentee, ('initialisation dudit suivi etant automatique, ce dispositif etant **caracterise en ce qu'**il comprend les moyens suivants,

- moyens pour determiner une pluralite de points d'interets dans au moins une image texturee dudit au moins un objet sensiblement plan a suivre;
- moyens pour extraire une pluralite de blocs d'image centres sur la pruralite de points d'interets, des positions, orientations, poses, associees aux blocs a partir d'au moins une image texturee dudit au moins un objet sensiblement plan a suivre;
- moyens pour recevoir une premiere image dudit au moins un flux video, ladite premiere image comprenant ledit au moins un objet sensiblement plan a suivre;
- moyens pour memoriser ladite premiere image dans des premiers moyens de stockage pour etre utilise en tant qu'image cle hors ligne;
- moyens pour determiner la position et ('orientation dudit au moins un objet sensiblement plan a suivre par determination d'un premier point d'interet et d'un seconde point d'interet de la premiere image et definition d'un premier bloc d'image autour du premier point d'interet et d'un seconde bloc d'image autour du seconde point d'interet dans ladite premiere image et comparer le premier et le seconde bloc d'image a la pluralite de blocs d'image prealablement memorises dans des seconds moyens de stockage, chaque bloc d'image de ladite pluralite de blocs d'image prealablement memorises etant associe a une pose dudit au moins un objet sensiblement plan a suivre, ladite pose etant memorisee dans lesdits seconds moyens de stockage, lesdites position et orientation determinees dudit au moins un objet sensiblement plan a suivre dans ladite premiere image etant memorisee dans lesdits premiers moyens de stockages;
- moyens pour recevoir une seconde image dudit au moins un flux video, ladite seconde image comprenant ledit au moins un objet sensiblement plan a suivre; et,
- moyens pour evaluer la position et l'orientation dudit au moins un objet sensiblement plan a suivre dans ladite seconde image a partir des donnees des blocs et des positions, orientations, et poses associes des blocs memorisees dans lesdits premiers moyens de stockage.

15. Dispositif selon la revendication 14 **caracterise en ce qu'**il comprend en outre des moyens pour determiner si la position et l'orientation dudit au moins un objet sensiblement plan a suivre peuvent etre evaluees dans ladite seconde image a partir des donnees memorisees dans lesdits premiers moyens de stockage, lesdits moyens pour determiner la position et l'orientation dudit au moins un objet sensiblement plan a suivre dans ladite premiere image a partir des donnees memorisees dans lesdits seconds moyens de stockage etant adaptes a evaluer la position et l'orientation dudit au moins un objet sensiblement plan a suivre dans ladite seconde image a partir des donnees memorisees dans lesdits seconds moyens de stockage.

16. Dispositif selon la revendication 14 ou la revendication 15 **caracterise en ce qu'**il comprend en outre des moyens pour memoriser ladite seconde image et la position et l'orientation dudit au moins un objet sensiblement plan a suivre dans ladite seconde image dans lesdits premiers moyens de stockage.

17. Dispositif selon l'une quelconque des revendications 14 a 16 **caracterise en ce qu'**il comprend en outre des moyens de transformation adaptes A determiner la pose dudit au moins un objet sensiblement plan a suivre ou du capteur d'images dont est issu ledit au moins un flux video dans l'un des reperes lies a ladite scene reelle, audit au moins un objet sensiblement plan a suivre ou audit capteur d'image.

18. Dispositif selon l'une quelconque des revendications 14 a 17 **caracterise en ce qu'**il comprend en outre des moyens pour inserer au moins un element dans au moins l'une desdites images revues selon la position et l'orientation evaluees dudit au moins un objet sensiblement plan a suivre dans ladite image revue, ledit au moins un element etant choisi dans une liste comprenant au moins une representation d'au moins un objet virtuel et au moins un second flux video.

19. Dispositif selon l'une quelconque des revendications 14 a 18 comprenant en outre des moyens pour recevoir lesdites premiere et seconde images d'au moins un telephone mobile.

**Patentansprüche**

1. Computerimplementiertes Verfahren zur Echtzeitverfolgung mindestens eines im Wesentlichen ebenen geometrischen Objekts einer realen Szene in mindestens zwei im Wesentlichen aufeinanderfolgenden Bildern von mindestens einem Videostrom in einer Augmented-Reality-Anwendung, wobei die Initialisierung des Verfahrens automatisch erfolgt, wobei dieses Verfahren **dadurch gekennzeichnet ist, dass** es die folgenden Schritte beinhaltet:

- Bestimmen (305) mehrerer Punkte von Interesse in mindestens einem texturierten Bild des genannten mindestens einen zu verfolgenden, im Wesentlichen ebenen Objekts;
- Extrahieren (310) mehrerer Bildblöcke, die auf den mehreren Punkten von Interesse zentriert sind, und von mit den Blöcken assoziierten Positionen und Orientierungen, Posen, auf der Basis von mindestens einem texturierten Bild des mindestens einen zu verfolgenden, im Wesentlichen ebenen Objekts;
- Empfangen eines ersten Bildes des genannten mindestens einen Videostroms (300), wobei das genannte erste Bild das genannte mindestens eine zu verfolgende, im Wesentlichen ebene Objekt enthält;
- Speichern (320) des genannten ersten Bildes in ersten Speichermitteln zur Verwendung als Offline-Schlüsselbild;
- Bestimmen der Position und der Orientierung des genannten mindestens einen zu verfolgenden, im Wesentlichen ebenen Objekts durch Bestimmen eines ersten Punkts von Interesse und eines zweiten Punkts von Interesse des ersten Bildes, und Definieren eines ersten Bildblocks um den ersten Punkt von Interesse und eines zweiten Bildblocks um den zweiten Punkt von Interesse in dem genannten ersten Bild (320), und Vergleichen des ersten und zweiten Bildblocks mit den mehreren zuvor im zweiten Speichermittel gespeicherten Bildblöcken, wobei jeder Bildblock der genannten mehreren zuvor gespeicherten Bildblöcken mit einer Pose des genannten mindestens einen zu verfolgenden, im Wesentlichen ebenen Objekts assoziiert ist, wobei die genannte Pose in den genannten zweiten Speichermitteln gespeichert ist, wobei die genannte bestimmte Position und Orientierung des genannten mindestens einen im ersten Bild zu verfolgenden, im Wesentlichen ebenen Objekts in den genannten ersten Speichermitteln gespeichert sind;
- Empfangen eines zweiten Bildes des genannten mindestens einen Videostroms (330), wobei das genannte zweite Bild das genannte mindestens eine zu verfolgende, im Wesentlichen ebene Objekts enthält; und
- Bewerten der Position und der Orientierung des genannten mindestens einen in dem genannten zweiten Bild zu verfolgenden, im Wesentlichen ebenen Objekts auf der Basis der Daten des Offline-Bildes und der genannten bestimmten Position und Orientierung des genannten mindestens einen in dem genannten ersten Bild zu verfolgenden, im Wesentlichen ebenen Objekts, die in den genannten ersten Speichermitteln gespeichert sind.

2. Verfahren nach Anspruch 1, **dadurch gekennzeichnet, dass** die Schritte des Empfangens eines Bildes und des Bewertens der Position und der Orientierung des genannten mindestens einen in dem genannten empfangenen Bild zu verfolgenden, im Wesentlichen ebenen Objekts für Bilder des genannten mindestens einen auf das genannte zweite Bild folgenden Videostroms wiederholt werden.

3. Verfahren nach einem der Ansprüche 1 bis 2, **dadurch gekennzeichnet, dass**, wenn die Position und die Orientierung des genannten mindestens einen zu verfolgenden, im Wesentlichen ebenen Objekts in einem empfangenen Bild auf der Basis der in den genannten ersten Speichermitteln gespeicherten Daten nicht bewertet werden können, die Position und die Orientierung des genannten mindestens einen in dem genannten empfangenen Bild zu verfolgenden, im Wesentlichen ebenen Objekts auf der Basis der mehreren Bildblöcke (320) bewertet werden.

4. Verfahren nach einem der vorherigen Ansprüche, **dadurch gekennzeichnet, dass** die in den ersten Speichermitteln gespeicherten Datenwerte durch ein empfangenes Bild und durch die bewertete Position und Orientierung des genannten in dem genannten empfangenen Bild zu verfolgenden, im Wesentlichen ebenen Objekts ersetzt werden.

5. Verfahren nach einem der vorherigen Ansprüche, **dadurch gekennzeichnet, dass** es ferner einen Schritt des Bewertens der Pose des Bildsensors, aus dem der genannte mindestens eine Videostrom stammt, in einem mit der realen Szene verbundenen Bezugspunkt auf der Basis der bewerteten Position des genannten mindestens einen zu verfolgenden, im Wesentlichen ebenen Objekts umfasst.

6. Verfahren nach Anspruch 5, **dadurch gekennzeichnet, dass** es ferner einen Schritt des Bestimmens der Bewegung des genannten Bildsensors beinhaltet.

7. Verfahren nach einem der vorherigen Ansprüche, **dadurch gekennzeichnet, dass** das genannte mindestens eine zu verfolgende, im Wesentlichen ebene Objekt eine Zone mit einheitlicher Farbe umfasst, die zum Implementieren der Chromakey-Technologie ausgelegt ist.

8. Verfahren nach einem der vorherigen Ansprüche, wobei das genannte mindestens eine zu verfolgende, im Wesentlichen ebene Objekt gleichzeitig in dem genannten mindestens einen Videostrom und in mindestens einem anderen Videostrom verfolgt wird, wobei der genannte mindestens eine Videostrom und der genannte mindestens eine andere Videostrom von mindestens zwei verschiedenen Kameras stammen, wobei das genannte Verfahren ferner einen Schritt des Schätzens der relativen Position und Orientierung der genannten mindestens zwei Kameras beinhaltet.

9. Verfahren nach einem der vorherigen Ansprüche, **dadurch gekennzeichnet, dass** es ferner einen Schritt des Einfügens von mindestens einem Element in mindestens eines der genannten revidierten Bilder gemäß der bewerteten Position und Orientierung des genannten mindestens einen zu verfolgenden, im Wesentlichen ebenen Bildes in dem genannten revidierten Bild beinhaltet, wobei das Element aus einer Liste ausgewählt wird, die mindestens eine Darstellung von wenigstens einem virtuellen Objekt und mindestens einem zweiten Videostrom umfasst.

10. Verfahren nach Anspruch 5, das ferner einen Schritt des Bestimmens der Bewegung eines Mobilgeräts (600), das den genannten Bildsensor umfasst, und einen Schritt des Identifizierens von mindestens einer Bewegung in einer virtuellen Szenerie gemäß der genannten Bewegung des genannten Mobilgeräts beinhaltet.

11. Verfahren nach einem der vorherigen Ansprüche, das ferner einen Schritt des Übertragens von mindestens einem Kontroll- und Steuerbefehl beinhaltet.

12. Verfahren nach einem der Ansprüche 1 bis 10, das ferner einen Schritt des Erfassens des ersten und zweiten Bildes und einen Schritt des Anzeigens eines Teils des genannten ersten und zweiten Bildes beinhaltet, wobei die genannten Erfassungs- und Anzeigeschritte in einem Mobilgerät (500) durchgeführt werden, das von dem die genannten anderen Schritte durchführenden Gerät entfernt ist.

13. Computerprogramm mit Befehlen, die zur Durchführung jedes der Schritte des Verfahrens nach einem der Ansprüche 1 bis 11 ausgelegt sind.

14. Datenverarbeitungsgerät mit Mitteln zur Durchführung des Verfahrens zur Echtzeitverfolgung von mindestens einem im Wesentlichen ebenen geometrischen Objekt einer realen Szene in wenigstens zwei im Wesentlichen aufeinanderfolgenden Bildern von mindestens einem Videostrom in einer Augmented-Reality-Anwendung, wobei die Initialisierung der Verfolgung automatisch erfolgt, wobei dieses Gerät **dadurch gekennzeichnet ist, dass** es die folgenden Mittel umfasst:

- Mittel zum Bestimmen mehrerer Punkte von Interesse in einem texturierten Bild des genannten mindestens einen zu verfolgenden, im Wesentlichen ebenen Objekts;
- Mittel zum Extrahieren mehrerer Bildblöcke, die auf den mehreren Punkten von Interesse zentriert sind, von Positionen, Orientierungen, Posen, die mit den Blöcken assoziiert sind, auf der Basis eines texturierten Bildes des genannten mindestens einen zu verfolgenden, im Wesentlichen ebenen Objekts;
- Mittel zum Empfangen eines ersten Bildes des genannten mindestens einen Videostroms, wobei das genannte erste Bild das genannte mindestens eine zu verfolgende, im Wesentlichen ebene Objekt enthält;
- Mittel zum Speichern des genannten ersten Bildes in ersten Speichermitteln zur Verwendung als Offline-Schlüsselbild;
- Mittel zum Bestimmen der Position und der Orientierung des genannten mindestens einen zu verfolgenden, im Wesentlichen ebenen Objekts durch Bestimmen eines ersten Punkts von Interesse und eines zweiten Punkts von Interesse des ersten Bildes, und Definieren eines ersten Bildblocks um den ersten Punkt von Interesse und eines zweiten Bildblocks um den zweiten Punkt von Interesse in dem genannten ersten Bild, und Vergleichen des ersten und zweiten Bildblocks mit mehreren zuvor in einem zweiten Speichermittel gespeicherten Bildblöcken, wobei jeder der genannten mehreren zuvor gespeicherten Bildblöcke mit einer Pose des genannten mindestens einen zu verfolgenden, im Wesentlichen ebenen Objekts assoziiert ist, wobei die genannte Pose in den genannten zweiten Speichermitteln gespeichert wird, wobei die genannte bestimmte Position und Orientierung des genannten mindestens einen in dem ersten Bild zu verfolgenden, im Wesentlichen ebenen Objekts in den genannten ersten Speichermitteln gespeichert werden;
- Mittel zum Empfangen eines zweiten Bildes des genannten mindestens einen Videostroms, wobei das genannte zweite Bild das genannte mindestens eine zu verfolgende, im Wesentlichen ebene Objekt enthält; und
- Mittel zum Bewerten der Position und der Orientierung des genannten mindestens einen in dem genannten zweiten Bild zu verfolgenden, im Wesentlichen ebenen Objekts auf der Basis der Daten der Blöcke und der Positionen, Orientierungen und Posen, die mit den in den genannten ersten Speichermitteln gespeicherten Blöcken assoziiert sind.

**15.** Gerät nach Anspruch 14, **dadurch gekennzeichnet, dass** es ferner Mittel zum Bestimmen umfasst, ob die Position und die Orientierung des genannten mindestens einen zu verfolgenden, im Wesentlichen ebenen Objekts in dem genannten zweiten Bild auf der Basis der in den genannten ersten Speichermitteln gespeicherten Daten bewertet werden können, wobei die genannten Mittel zum Bestimmen der Position und der Orientierung des genannten mindestens einen zu verfolgenden, im Wesentlichen ebenen Objekts in dem genannten ersten Bild auf der Basis der in den genannten ersten Speichermitteln gespeicherten Daten zum Bewerten der Position und der Orientierung des genannten mindestens einen in dem genannten zweiten Bild zu verfolgenden, im Wesentlichen ebenen Objekts auf der Basis der in den genannten zweiten Speichermitteln gespeicherten Daten ausgelegt ist.

**16.** Gerät nach Anspruch 14 oder 15, **dadurch gekennzeichnet, dass** es ferner Mittel zum Speichern des genannten zweiten Bildes und der Position und der Orientierung des genannten mindestens einen in dem genannten zweiten Bild zu verfolgenden, im Wesentlichen ebenen Objekts in den genannten ersten Speichermitteln umfasst.

**17.** Gerät nach einem der Ansprüche 14 bis 16, **dadurch gekennzeichnet, dass** es ferner Transformationsmittel umfasst, ausgelegt zum Bestimmen der Pose des genannten mindestens einen zu verfolgenden, im Wesentlichen ebenen Objekts oder des Bildsensors, von dem das genannte zu verfolgende, im Wesentlichen ebene Objekt stammt, in einem der mit der realen Szene verbundenen Bezugspunkte, zu dem genannten mindestens einen zu verfolgenden, im Wesentlichen ebenen Objekt oder dem genannten Bildsensor.

**18.** Gerät nach einem der Ansprüche 14 bis 17, **dadurch gekennzeichnet, dass** es ferner Mittel zum Einfügen mindestens eines Elements in mindestens eines der genannten revidierten Bilder gemäß der bewerteten Position und Orientierung des genannten mindestens einen in diesem Bild zu verfolgenden, im Wesentlichen ebenen Objekts umfasst, wobei das genannte wenigstens eine Element aus einer Liste ausgewählt ist, die mindestens eine Darstellung von mindestens einem virtuellen Objekt und mindestens einem zweiten Videostrom umfasst.

**19.** Gerät nach einem der Ansprüche 14 bis 18, das ferner Mittel zum Empfangen des genannten ersten und zweiten Bildes von mindestens einem Mobiltelefon umfasst.

## Claims

**1.** Computer-implemented method for tracking in real time at least one substantially planar geometrical object from a real scene in at least two substantially consecutive images from at least one video stream, in an augmented reality application, the initialization of the method being automatic, the method being **characterized in that** it comprises the steps of,

- determining (305) a plurality of points of interest in at least one textured image of said at least one substantially planar object to be tracked;
- extracting (310) a plurality of image blocks centered on the plurality of points of interest and associated positions and orientations, poses of the blocks, based on at least one textured image of said at least one substantially planar object to be tracked;
- receiving a first image from said at least one video stream (300), said first image comprising said at least one substantially planar object to be tracked;
- storing (320) said first image in first storage means to be used as an offline key image;
- determining the position and orientation of said at least one substantially planar object to be tracked by determining a first point of interest and a second point of interest of the first image and defining a first image block around the first point of interest and a second image block around the second point of interest in said first image (320) and comparing the first and the second image block with the plurality of image blocks previously stored in second storage means, each image block of said plurality of image blocks previously stored being associated with a pose of said at least one substantially planar object to be tracked, said pose being stored in said second storage means, said determined position and orientation of said at least one substantially planar object to be tracked in said first image being stored in said first storage means;
- receiving a second image from said at least one video stream (330), said second image comprising said at least one substantially planar object to be tracked; and
- evaluating the position and orientation of said at least one substantially planar object to be tracked in said second image based on the data of the offline key image and said determined position and orientation of said at least one substantially planar object to be tracked in said first image being stored in said first storage means.

2. The method of claim 1, **characterized in that** the steps of receiving an image and of evaluating the position and orientation of said at least one substantially planar object to be tracked in said received image are repeated for images from said at least one video stream following said second image.

3. The method of any of claims 1 to 2, **characterized in that** if the position and orientation of said at least one substantially planar object to be tracked cannot be evaluated in a received image based on the data stored in said first storage means, the position and orientation of said at least one substantially planar object to be tracked in said received image are evaluated based on said plurality of image blocks (320).

4. The method of any of the foregoing claims, **characterized in that** the values of the data stored in said first storage means are replaced with a received image and with the evaluated position and orientation of said substantially planar object to be tracked in said received image.

5. The method of any of the foregoing claims, **characterized in that** it further comprises a step of evaluating the pose of the image sensor from which originates said at least one video stream, in a frame of reference linked to said real scene based on the evaluated position of said at least one substantially planar object to be tracked.

6. The method of claim 5, **characterized in that** it further comprises a step of determining the movement of said image sensor.

7. The method of any of the foregoing claims, **characterized in that** said at least one substantially planar object to be tracked comprises an area of uniform colour adapted to implement the chromakey technology.

8. The method of any of the foregoing claims, wherein said at least one substantially planar object to be tracked is simultaneously tracked in said at least one video stream and in at least one other video stream, said at least one video stream and said at least one other video stream originating from at least two different cameras, said method further comprising a step of estimating the relative position and orientation of said at least two cameras.

9. The method of any of the foregoing claims, **characterized in that** it further comprises a step of inserting at least one element into at least one of said received images according to the evaluated position and orientation of said at least one substantially planar object to be tracked in said received image, said at least one element being selected from a list comprising at least one representation of at least one virtual object and at least one second video stream.

10. The method of claim 5, further comprising a step of determining the movement of a mobile device (600) comprising said image sensor and a step of identifying at least one movement in a virtual scene according to said movement of said mobile device.

11. The method of any of the foregoing claims, further comprising a step of transmitting at least one control and command instruction.

12. The method of any of claims 1 to 7, further comprising a step of acquiring said first and second images and a step of displaying at least a portion of said first and second images, said acquisition and display steps being implemented in a mobile device (500) remote from the device implementing said other steps.

13. A computer program comprising instructions capable of implementing each of the steps of the method of any of claims 1 to 11.

14. A device for data processing including means for carrying out the method for tracking in real time at least one substantially planar geometrical object from a real scene in at least two substantially consecutive images from at least one video stream, in an augmented reality application, the initialization of said tracking being automatic, such device being **characterized in that** it comprises the following means,

- means for determining a plurality of points of interest in at least one textured image of said at least one substantially planar object to be tracked;
- means for extracting a plurality of image blocks centered on the plurality of points of interest and associated positions and orientations, poses of the blocks, based on at least one textured image of said at least one substantially planar object to be tracked;
- means for receiving a first image from said at least one video stream, said first image comprising said at least one substantially planar object to be tracked;
- means for storing said first image in first storage means to be used as an offline key image;
- means for determining the position and orientation of said at least one substantially planar object to be tracked by determining a first point of interest and a second point of interest of the first image and defining a first image block around the first point of interest and a second image block around the second point of interest in said first image and comparing the first and the second image block with the plurality of image blocks previously stored in second storage means, each image block of said plurality of image blocks previously stored being associated with a pose of said at least one substantially planar object to be tracked, said pose being stored in said second storage means, said determined position and orientation of said at least one substantially planar object to be tracked in said first image being stored in said first storage means;
- means for receiving a second image from said at least one video stream, said second image comprising said at least one substantially planar object to be tracked; and
- means for evaluating the position and orientation of said at least one substantially planar object to be tracked in said second image based on the data of the blocks and associated positions and orientations, poses of the blocks stored in said first storage means.

15. The device of claim 14, **characterized in that** it further comprises means for determining whether the position and orientation of said at least one substantially planar object to be tracked can be evaluated in said second image based on data stored in said first storage means, said means for determining the position and orientation of said at least one substantially planar object to be tracked in said first image based on the data stored in said second storage means being adapted to evaluate the position and orientation of said at least one substantially planar object to be tracked in said second image based on the data stored in said second storage means.

16. The device of claim 14 or claim 15, **characterized in that** it further comprises means for storing said second image and the position and orientation of said at least one substantially planar object to be tracked in said second image in said first storage means.

17. The device of any of claims 14 to 16, **characterized in that** it further comprises transformation means adapted to determine the pose of said at least one substantially planar object to be tracked or of the image sensor from which originates said at least one video stream, in one of the frames of reference linked to said real scene, said at least one substantially planar object to be tracked, or said image sensor.

18. The device of any of claims 14 to 17, **characterized in that** it further comprises means for inserting at least one element into at least one of said received images according to the evaluated position and orientation of said at least one substantially planar object to be tracked in said received image, said at least one element being selected from a list comprising at least one representation of at least one virtual object and at least one second video stream.

19. The device of any of claims 14 to 18, further comprising means for receiving said first and second images from at least one mobile phone.

Fig. 1

Imageclé courante

Image courante

Image précédente

Détecteur de points d'intérêt

Détecteur de points d'intérêt

Détecteur de points d'intérêt

appariement

appariement

Modèle CAO

Calcul de pose

Calcul de pose

Pose keyframe

Pose image précédente

Synthèse

Pose 3D

Fig. 2

**I**

300 — Acquisition d'une image texturé de l'objet

305 — Recherche de points d'intérêts sur l'image

310 — Génération de "**patches**" avec des paramètres d'échelle et d'orientation aléatoires

315 — Construction d'arbres de recherche avec ces différents **patches**

**II**

320 — Création d'une keyframe offline de référence

325 — Initialisation automatique utilisant la keyframe offline

**III**

330 — Poursuite de l'objet

Accrochage

décrochage

Fig. 3

Fig. 4

Flux vidéo
sortant

515

510

500

Emetteur -
Récepteur

Emetteur -
Récepteur

**Serveur**
Application de
poursuite d'objet

505

Flux vidéo
entrant augmenté

(a)

505'

Contrôle/commande

515'

510'

500'

Application de
poursuite d'objet

Emetteur -
Récepteur

Emetteur -
Récepteur

**Serveur**

Informations diverses

(b)

Fig. 5

EP 2 132 710 B1

Fig. 6

Axe de la caméra

Axe plan caméra largeur

Axe plan caméra longueur

Fig. 7

EP 2 132 710 B1